# FASCICULE DE BREVET EUROPEEN

(11) **EP 2 142 834 B1**
(45) Date de publication et mention de la délivrance du brevet: **23.10.2013**
(21) Numéro de dépôt: 08788125.6
(22) Date de dépôt: 04.04.2008
(51) Int. Cl.: F16L 23/032, F16J 15/04

(54) **DISPOSITIF DE LIAISON ETANCHE PRECONTRAINTE A BRIDES**
VORRICHTUNG FÜR EINE VORGESPANNTE VERSIEGELUNGSVERBINDUNG MIT FLANSCHEN
DEVICE FOR PRE-STRESSED SEALED CONNECTION WITH FLANGES

(30) Priorité: 05.04.2007 FR 0754313
(43) Date de publication de la demande: 13.01.2010
(73) Titulaire: Snecma, 75015 Paris (FR)
(72) Inventeur: MAGNIER, Isabelle, F-27940 Notre Dame de l'Isle (FR); ROURE, Christian, F-27200 Vernon (FR)
(74) Mandataire: Thévenet, Jean-Bruno
(86) Numéro de dépôt international: PCT/FR2008/050602
(87) Numéro de publication internationale: WO 2008/139097

(56) Documents cités:
- EP-A- 0 851 158
- EP-A- 1 772 660
- WO-A-93/17268
- DE-A1- 2 430 627
- DE-A1- 3 605 944
- US-A1- 2002 000 695
- US-A1- 2005 247 294

## Description

### Domaine de l'invention

La présente invention a pour objet un dispositif de liaison étanche précontrainte à brides, comprenant une première bride présentant une première surface de contact, une deuxième bride présentant une deuxième surface de contact située en regard de ladite première surface de contact, un joint d'étanchéité disposé dans un logement de joint ménagé entre lesdites première et deuxième surfaces de contact et des moyens de serrage des première et deuxième brides disposés entre le logement de joint et la périphérie des première et deuxième brides pour venir mettre en contact entre elles au moins une partie des première et deuxième surfaces de contact.

L'invention s'applique ainsi à des liaisons démontables.

### Art antérieur

L'invention concerne les liaisons à brides dites à "talon" dans lesquelles il existe une surface de contact interbrides étroite de manière à obtenir une pression de contact élevée près du joint et ainsi augmenter les performances en étanchéité en minimisant la déformation du logement du joint.

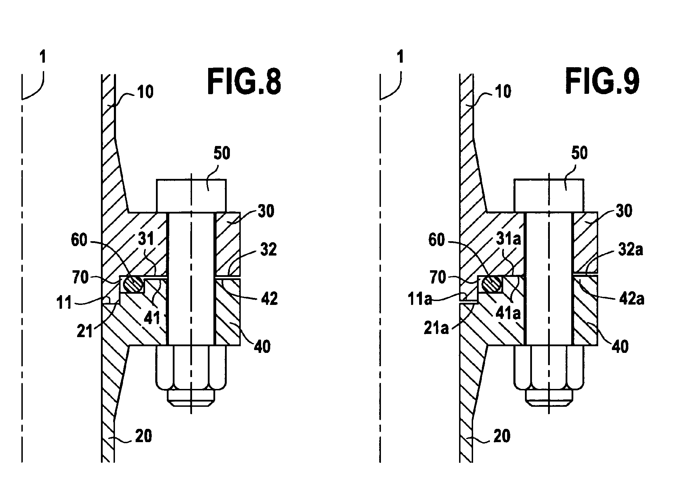

On a représenté sur la figure 8, en demi-coupe axialé, un exemple de dispositif de liaison connu à brides ayant un axe de symétrie 1, deux éléments de tuyauterie 10, 20 munis de brides 30, 40 du type à talon assemblées à l'aide d'organes de liaison 50 tels que des boulons. Les brides 30, 40 comportent un talon de contact 11, 21 situé à l'intérieur par rapport à un joint 60 placé dans un logement de joint 70. Les autres surfaces 31, 32 et 41, 42 des brides 30 et 40 respectivement placées en regard les unes des autres au niveau des boulons 50 ne sont pas en contact avant le serrage des boulons 50 et un espace libre de faible épaisseur est ménagé entre ces surfaces en regard.

En fonctionnement, après serrage des boulons 50 et présence d'un champ de pression P à l'intérieur de la canalisation 10, 20, l'espace libre entre les surfaces 31, 32 de la bride 30 et les surfaces 41, 42 de la bride 40 se réduit et permet au talon 11 de la bride 30 de rester en contact avec la surface correspondante 21 de la bride 40.

De façon similaire, on a représenté sur la figure 9, en demi-coupe axiale, un exemple de dispositif de liaison connu à brides similaire à celui de la figure 8, mais avec des brides 30, 40 qui comportent un talon de contact 31a, 41a situé à l'extérieur par rapport au joint 60 placé dans le logement de joint 70. Les autres surfaces 11a, 32a de la bride 30 et les surfaces 21a, 42a de la bride 40 placées en regard les unes des autres d'une part à l'intérieur par rapport au joint 60 (surfaces 11a, 21a) et d'autre part à l'extérieur par rapport aux moyens de liaison 50 (surfaces 32a, 42a) ne sont pas en contact avant le serrage des boulons 50 et définissent un espace libre de faible épaisseur qui se réduit après serrage des boulons 50 pour permettre aux surfaces 31a, 41a situées au niveau du talon de bride de rester en contact entre elles.

Toutefois lors de la conception des liaisons dites "à talon", il arrive fréquemment que les contraintes de contact entre les liaisons et les faces d'appui soient localement excessives. Les marges mécaniques apparaissent alors négatives.

Cela vient du fait que le concept de brides à talons génère une flexion des brides.

Cette flexion a pour conséquence de focaliser le contact des talons sur leur périphérie en provoquant ainsi une concentration de forces et donc de contraintes de compression.

Cet effet a pour conséquence directe de générer des matages des surfaces en contact, au montage et pendant le service, au détriment de la qualité des surfaces.

Ces matages des surfaces provoquent par la suite, une perte en service du serrage des liaisons.

Les habitudes de conception pour contrer ces phénomènes de matage et fluage sont de surdimensionner les brides.

Pour abaisser les contraintes locales excessives, il est habituel d'augmenter les surfaces en contact, ainsi que l'épaisseur des plateaux, pour diminuer les flexions, au détriment de la masse et de l'encombrement. 3

On connait par ailleurs par le document WO93/17268 A1 une liaison étanche précontrainte à brides qui incorpore un joint disposé dans deux demi-logements disposés dans chaque bride, et qui dévoile le préambule de la revendication 1.

### Objet et description succincte de l'invention

L'invention vise à remédier aux inconvénients précités et à permettre de réaliser un dispositif de liaison étanche précontrainte à brides dont la qualité et la durée de vie sont améliorées tandis que le coût et l'encombrement sont réduits.

Le dispositif selon l'invention est défini dans les revendications annexées.

Ces buts sont atteints, conformément à l'invention, grâce à un dispositif de liaison étanche précontrainte à brides selon les caractéristiques techniques de la revendication 1.

Ainsi, selon l'invention, la surface paramétrée qui permet, après serrage des moyens de serrage, d'uniformiser la pression de contact des surfaces en vis-à-vis, est une surface conique, qui constitue une solution "industrielle" proche de la surface idéale.

De préférence, ladite fraction de la surface de la zone d'appui localisé correspond à une valeur inférieure ou égale à 30 % de la surface de la zone d'appui localisé.

La zone d'appui localisé peut constituer par rapport au joint d'étanchéité aussi bien un talon intérieur qu'un talon extérieur.

Selon l'invention, le dispositif comprend une cale interposée entre les première et deuxième brides au niveau de ladite zone d'appui paramétrée et présentant une surface paramétrée qui constitue ladite surface paramétrée définissant le contact entre les première et deuxième brides au niveau de la zone d'appui localisé.

Grâce aux mesures préconisées par la présente invention, il n'est pas nécessaire de renforcer ou alourdir les pièces constituant le dispositif de liaison et c'est la seule forme géométrique des surfaces en contact au niveau de la zone d'appui localisé qui permet de diminuer et d'optimiser le niveau de contrainte maximum au niveau du contact entre un talon formé sur une bride et la face d'appui correspondante formée sur l'autre bride.

En procédant à l'usinage d'une surface conique, il est possible d'optimiser le dispositif de liaison à bride à talon de telle sorte que le contact au niveau du talon c'est-à-dire de la zone d'appui localisé, devienne quasi parfait après l'introduction de l'effort de serrage et la déformation de la liaison qui en découle. Par suite, contrairement aux dispositifs de l'art antérieur, les concentrations locales de forces et les concentrations de contraintes mécaniques sont supprimées.

En améliorant ainsi la répartition des contraintes sur toute la surface de contact de la zone d'appui localisé, il est possible de diminuer les surfaces de contact, ce qui se traduit par une diminution de l'encombrement de la liaison et pour les brides à talon intérieur au joint, la diminution de la largeur du talon permet également de diminuer le diamètre du joint, et ainsi de minimiser l'effet de fond. Cette diminution de l'effet de fond permet de réduire le besoin de serrage et par conséquent le nombre de vis.

Cette invention permet également de réduire l'épaisseur des plateaux car la déformée des plateaux n'est plus aussi problématique.

En éliminant les concentrations de contraintes, l'invention permet de limiter la perte en service du serrage des liaisons due aux matages des surfaces et améliore ainsi les performances d'étanchéité.

Elle permet également d'éviter la dégradation des surfaces et d'augmenter la durée de vie de l'assemblage.

En résumé, l'invention permet des gains de masse ainsi qu'en marges mécaniques et d'étanchéité.

### Brève description des dessins

D'autres caractéristiques et avantages de l'invention ressortiront de la description suivante de modes particuliers de réalisation, en référence aux dessins annexés, sur lesquels :
- les figures 1 et 2 sont des vues en coupe axiale d'un premier exemple de dispositif de liaison étanche précontrainte à brides non conforme à l'invention, mais utile à sa compréhension, respectivement avant serrage et après serrage des boulons assurant la précontrainte,
- les figures 3 et 4 sont des vues en coupe axiale d'un deuxième exemple de dispositif de liaison étanche précontrainte à brides non conforme à l'invention, mais utile à sa compréhension, respectivement avant serrage et après serrage des boulons assurant la précontrainte,
- la figure 5 est une vue en demi-coupe axiale montrant l'application d'un dispositif de liaison étanche selon l'invention à un réservoir de fluide sous pression,
- la figure 6 est une vue de détail du dispositif de liaison étanche de la figure 5,
- la figure 7 est une vue en coupe axiale, d'une cale mise en oeuvre dans un dispositif de liaison étanche tel que celui des figures 5 et 6, et
- les figures 8 et 9 sont des vues en demi-coupe axiale de deux exemples de dispositif de liaison étanche à brides connus du type à talon, de l'art antérieur, respectivement dans une configuration avec un talon situé à l'intérieur par rapport au joint d'étanchéité et dans une configuration avec un talon situé à l'extérieur par rapport au joint d'étanchéité.

### Description détaillée de modes particuliers de réalisation

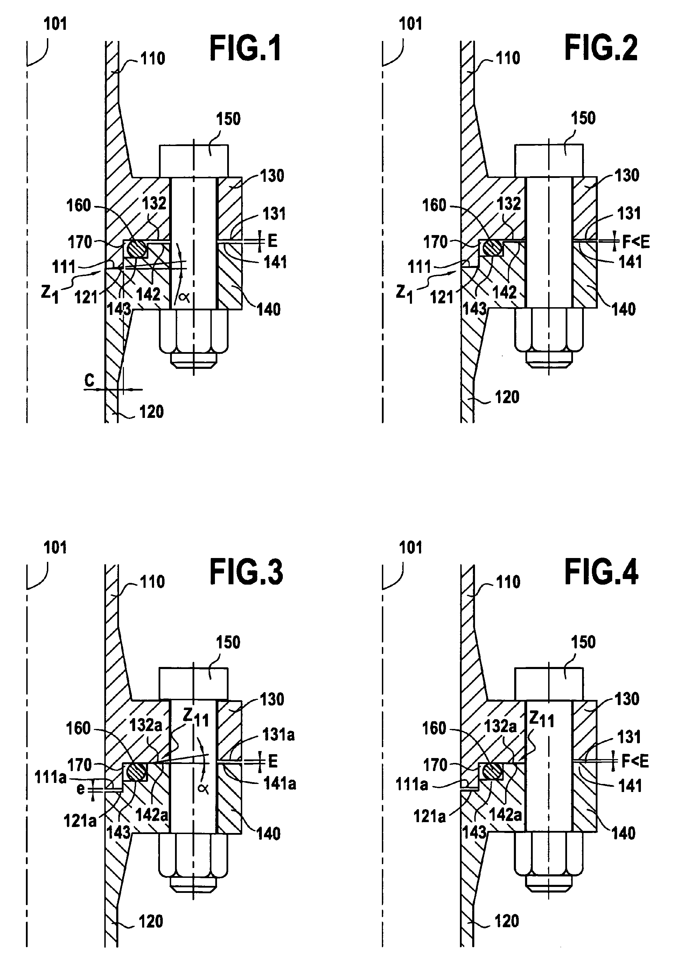

On décrira en référence aux figures 1 et 2 un premier exemple de réalisation d'un dispositif de liaison étanche précontrainte démontable à brides.

Dans cet exemple, des tronçons de canalisation ou de réservoir 110, 120 ayant un axe de révolution 101 sont reliés chacun à une bride annulaire 130 respectivement 140. Les brides 130, 140 sont traversées par des éléments de liaison 150 tels que des boulons, vis, goujons ou similaires qui permettent d'exercer une précontrainte sur ces brides 130, 140.

La figure 1 montre un dispositif de liaison avant serrage des éléments de liaison 150 tandis que la figure 2 montre le dispositif de liaison après serrage de ces éléments de liaison 150.

Sur la figure 1, dans le voisinage des éléments de liaison 150, la face inférieure 131, 132 de la bride supérieure 130, qui est essentiellement transversale à l'axe de révolution 101, est une surface continue, sans partie en retrait (à l'exception des ouvertures de passage des éléments de liaison 150).

La face inférieure 131, 132 de la bride supérieure 130 se raccorde vers l'intérieur à une partie de tronçon de canalisation 110 dont la face inférieure 111, avant serrage des boulons 150 (figure 1) forme dans une zone localisée Z1 un angle α par rapport à une direction perpendiculaire à l'axe 101.

La face supérieure 141, 142 de la bride inférieure 140 est une surface continue essentiellement transversale à l'axe de révolution 101, dans le voisinage des éléments de liaison 150. Avant serrage des boulons 150, la face 141, 142 de la bride 140 est légèrement écartée, d'une distance E, de la face 131, 132 de la bride 130.

La face supérieure 141, 142 de la bride 140 présente cependant une partie en retrait 143 destinée à former avec une partie de la face 132 de la bride 130 et le tronçon de canalisation 110 un logement 170 dans lequel est placé un joint 160.

La partie en retrait 143 se prolonge par un épaulement et définit vers l'intérieur dans la zone Z1 une surface 121 qui, avant serrage des boulons 150, forme un angle α avec la surface conique 111 qui lui fait face et n'est donc en contact avec la surface 111 que sur une fraction de la surface de la zone d'appui localisée Z1, qui s'étend sur une distance C (figure 1).

Selon un premier mode de réalisation possible, la surface 121 est perpendiculaire à l'axe 101, et la surface 111 est une surface conique. Selon un autre mode de réalisation possible, la surface 111 est perpendiculaire à l'axe 101 et la surface 121 est une surface conique.

Après serrage des boulons 150, comme on peut le voir sur la figure 2, la distance F entre la face inférieure 131, 132 de la bride supérieure 130 et la face supérieure 141, 142 de la bride inférieure 140 est ramenée à une valeur inférieure à celle de la distance E initiale.

Au niveau du talon de la bride 130, qui correspond à la zone d'appui localisé Z1, on voit que la surface inférieure 111 du tronçon de canalisation 110 est en contact uniforme avec la face 121 du tronçon de canalisation 120. Après serrage des boulons 150, le contact est donc réparti uniformément sur l'ensemble de la zone d'appui localisé Z1, qui dans l'exemple des figures 1 et 2 se situe au niveau d'un talon intérieur par rapport au point 160.

Il est à noter que les termes "inférieur" et "supérieur" sont utilisés dans la présente description par commodité en référence à la position des brides sur le dessin, mais la liaison à brides peut naturellement avoir n'importe quelle position par rapport à la verticale.

Selon l'invention, il est possible d'obtenir sur une liaison bride à talon, un contact talon/bride (dans la zone Z1) quasi parfait, alors que la liaison se trouve déformée par l'effort de serrage.

Dans ce cas, les concentrations locales de forces et concentrations de contraintes mécaniques sont inexistantes. La pression de contact s'assimile alors à une pression moyenne, facile à calculer, qui ne dépend que de l'effort et de l'étendue de la surface de contact.

Au début de l'assemblage, du fait de l'inclinaison de la face 111 par rapport à la face 121, lorsque l'effort du serrage n'est pas encore appliqué, les surfaces de contact bride/talon (dans la zone Z1) ont peu d'aire de contact car les composants ne sont pas déformés.

La portance dans la zone d'appui localisé Z1 augmente avec l'augmentation de l'effort de serrage en considérant la déformation des composants de l'assemblage. La déformation des pièces est calculée pour que la surface de contact dans la zone Z1 soit maximum in fine quand l'effort de serrage est complètement appliqué (figure 2).

L'invention permet ainsi de conserver tous les avantages des liaisons à brides dites "à talon", c'est-à-dire l'existence d'une surface de contact interbrides étroite dans une zone d'appui localisé Z1 située au voisinage du joint d'étanchéité et constituant un épaulement par rapport à l'ensemble des autres zones des surfaces de contact, afin d'obtenir une pression de contact élevée près du joint, et ainsi augmenter les performances en étanchéité en minimisant la déformation du logement du joint, sans avoir les inconvénients de l'art antérieur (dégradation de l'état des surfaces en contact lors du montage ou pendant le service par suite d'une concentration de forces excessive ou nécessité d'augmenter les surfaces en contact ainsi que l'épaisseur des plateaux, pour diminuer les flexions, au détriment de la masse et de l'encombrement).

Selon l'invention, c'est la déformation des composants qui participe à la bonne répartition des contraintes du contact, du fait de la forme initiale des surfaces en regard dans la zone d'appui localisé Z1.

La définition de l'angle α et de l'étendue du contact initial entre les surfaces 111 et 121 est optimisée en utilisant des calculs éléments finis pour que le contact des composants soit parfait quand les pièces se trouvent déformées par le serrage. L'angle α peut être compris de préférence entre 1° et 10°.

En fin de serrage, la pression de contact s'assimile à une pression moyenne, qui ne dépend que de l'effort et de l'étendue de la surface de contact, et est donc facile à calculer.

Les caractéristiques des surfaces 111 et 124 peuvent être obtenues par modélisation de plusieurs surfaces enveloppes coniques distinctes de talons et une approche itérative ou paramétrique, qui prend également en compte les efforts de serrage des vis.

La forme optimale initiale à retenir peut être déduite de l'analyse des champs de pression de contact issus des différents calculs.

A titre d'exemple, pour une application à une liaison entre un générateur de gaz chaud et une ligne d'entrée turbine d'un moteur fixé, on a réalisé une liaison comportant un premier talon selon la configuration des figures 1 et 2.

Dans ce cas, pour une bride réalisée en Inconel 625, la contrainte de matage du talon dépasse la limite élastique de ce matériau (limite élastique de 360 MPa) sur environ un tiers du talon dans le cas d'un talon classique, tel que celui de la figure 8. En revanche, en réalisant un usinage conique du talon, comme selon la figure 1, on observe une répartition quasi uniforme des contraintes et une contrainte maximum de matage (de 340 MPa) qui se trouve en dessous de la limite élastique.

En ce qui concerne les contraintes maximales locales, dans l'exemple précité, l'usinage conique du talon (surface 111) présente également un effet positif dans la mesure où les contraintes maximales passent de 581 MPa à 340 MPa.

L'optimisation selon l'invention augmente ainsi les marges mécaniques des liaisons, ce qui permet en conséquence une réduction de masse, et l'optimisation s'obtient sans surcoût de production puisque la réalisation des surfaces coniques peut être faite avec les techniques de tournage classiques.

Les figures 3 et 4 montrent une variante de réalisation, qui est appliquée à des liaisons à bride à talon du type dans lequel le talon, et donc la zone d'appui localisée Z11, sont situés à l'extérieur du joint 160.

Sur les figures 3 et 4, les éléments semblables à ceux des figures 1 et 2 portent les mêmes références. On voit ainsi deux tronçons de canalisation 110, 120 équipés de brides 130, 140 assemblées par des éléments de liaison 150, l'étanchéité étant assurée par un joint 160 placé dans un logement 170.

Sur la figure 3, qui correspond à une situation avant serrage des boulons 150, les parties 111a, 132a, 131a de la face inférieure de la bride supérieure 130 correspondent aux parties 111, 132, 131 de la face inférieure de la bride 130 de la figure 1 et les parties 121a, 143, 142a, 141a de la face supérieure de la bride inférieure 140 correspondent aux parties 121, 143, 142, 141 de la face supérieure de la bride 140 de la figure 1.

Toutefois, dans le mode de réalisation de la figure 3, les faces 111a et 121a des tronçons de canalisation 110, 120 situées à l'intérieur par rapport au joint 160 sont toutes deux perpendiculaires à l'axe 101 et définissent entre elles un espace libre d'épaisseur e.

En revanche, dans le mode de réalisation de la figure 3, la zone d'appui localisée Z11 est située au niveau des surfaces 132a, 142a qui sont intercalées entre le logement de joint 170 et les éléments de liaison 150. La surface 132a est conique et forme un angle α, de préférence compris entre 1° et 10°, par rapport à la surface 142a de la bride 140 qui est perpendiculaire à l'axe 101. Avant serrage des boulons 150, la surface conique 132a n'est en contact avec la surface 142a de la zone d'appui localisé Z11 que sur une fraction de la surface de cette zone Z11. Dans le cas de la figure 3, la surface inférieure 131a de la bride supérieure 130 et la surface supérieure 141a de la bride inférieure 140, qui se situent à l'extérieur des éléments de liaison 150, présentent un écartement d'une épaisseur E. La surface 131a peut ou non être dans la continuité de la surface conique 132a.

Après serrage des boulons 150 (figure 4), la distance entre la face inférieure 131a de la bride supérieure 130 et la face supérieure 141a de la bride inférieure 140 présente une valeur F qui est inférieure à la valeur E de la distance initiale de la figure 3.

Au niveau de la zone d'appui localisée Z11, après serrage des boulons 150, la surface inférieure 132a de la bride supérieure 130 est en contact uniforme avec la surface supérieure 142a de la bride inférieure 140. Le contact est donc réparti uniformément sur l'ensemble de la zone d'appui localisé Z11 qui dans l'exemple des figures 3 et 4 se situe au niveau d'un talon extérieur par rapport au joint 160.

Dans le cas du mode de réalisation des figures 3 et 4, comme dans celui des figures 1 et 2, la définition de l'angle α et de l'étendue du contact initial entre les surfaces 132a, 142a est optimisée en utilisant des calculs éléments finis pour que le contact des composants soit optimisé quand les pièces se trouvent déformées par le serrage.

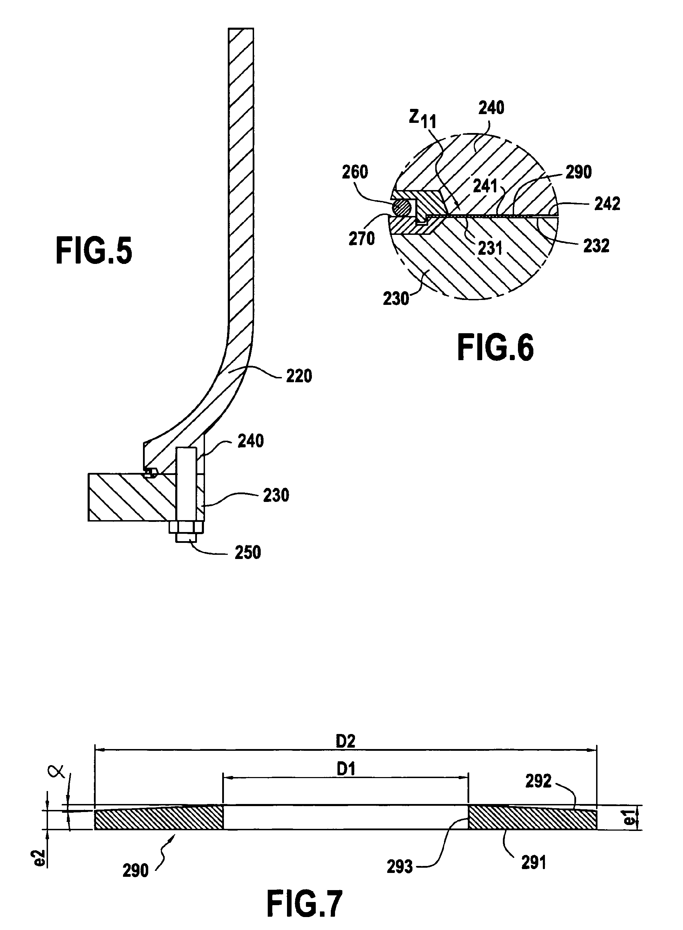

Les figures 5 et 6 montrent un exemple d'application de l'invention à une liaison à bride entre la paroi 220 d'un réservoir pouvant contenir un fluide tel que par exemple de l'hydrogène, et le couvercle 230 de celui-ci. Dans ce cas, comme on peut le voir sur la figure 5, le réservoir 220 comporte une bride 240 qui coopère avec la partie périphérique du couvercle 230 et est assemblée à celle-ci par des goujons 250.

La figure 6 montre de façon plus détaillée les portions de la bride 240 et du couvercle 230 qui coopèrent entre elles au voisinage du joint 260 placé dans un logement 270. La paroi 242 de la bride 240 fait face à la paroi 232 du couvercle 230 avec un espace libre de faible épaisseur, tandis que la zone d'appui localisé Z11 située juste à l'extérieur du joint 260 est définie par les surfaces en regard 241, 231 de la bride 240 et du couvercle 230.

Toutefois, contrairement au cas des figures 3 et 4, les surfaces 241 et 231 ne coopèrent pas directement entre elles, et peuvent donc être parallèles et non pas divergentes. En effet, dans le mode de réalisation des figures 5 et 6, et ceci selon l'invention, il est intercalé une cale 290 entre les surfaces 231 et 241 définissant la zone d'appui localisé Z11.

Comme on peut le voir sur la figure 7, la cale 290 comprend une face plane 291 destinée à coopérer avec l'une des faces 231, 241 et, selon l'invention, une face conique 292 destinée à coopérer avec l'autre des faces 231, 241.

La face conique 292 est inclinée d'un angle α par rapport à la face plane 291.

Comme représenté sur la figure 7, la cale annulaire 290 présente un diamètre extérieur D2, un diamètre intérieur D1 (orifice 293), une épaisseur e₁ au niveau de la partie interne de diamètre intérieur D1 et une épaisseur e₂, inférieure à e₁, au niveau de la partie externe de diamètre extérieur D2.

La surface conique 292 de la cale 290 joue le même rôle que la surface conique 132a de la figure 3 ou la surface conique 111 de la figure 1.

L'usinage conique de la cale permet de résoudre les problèmes de matage de la cale et des surfaces d'appui qui se produiraient si la cale plate présentait une épaisseur uniforme.

A titre d'exemple, pour une cale 290 en acier inoxydable tel que l'acier inoxydable 304L, la limite élastique est de 180 MPa. La cale peut être dimensionnée à 150 MPa (pour un effort de serrage correspondant à 91 tonnes par goujon 250).

Avec une cale plate d'épaisseur uniforme, qui ne fait pas partie de l'invention, dimensionnée comme indiqué ci-dessus avec par exemple e = 14 mm, D₁ = 542 mm, D₂ = 646 mm) que ce soit au montage ou en fonctionnement, le champ de contraintes se concentre dans le voisinage immédiat de la partie périphérique extérieure de la cale, et atteint, au montage, des valeurs largement supérieures à la limite élastique de 180 MPa. Ces contraintes sont principalement dues à la déformation du couvercle sous l'effet du serrage et à l'effet de bord.

De même, si le réservoir est réalisé en alliage A48H avec une limite élastique de 255 MPa, on constate que la mise en oeuvre d'une cale 290 d'épaisseur e constante induit sur la pièce de la bride du réservoir en contact avec la cale une contrainte de compression qui peut atteindre 285 MPa.

A l'inverse, avec une cale 290 "biaisée", selon l'invention, réalisée conformément à la figure 7, par exemple avec une épaisseur e_{Z} = 1,25 mm à la périphérie extérieure de la cale et une épaisseur e₁ = 1,4 mm au niveau de l'ouverture interne 293, on constate que la répartition des contraintes est équilibrée.

De même, avec une cale 290 biaisée, la répartition des contraintes est également plus uniforme sur les faces du réservoir en contact avec la cale, ce qui permet de diminuer les contraintes et évite le marquage des surfaces. La contrainte de matage maximum de 285 MPa dans l'exemple précédent peut ainsi être ramenée à 120 MPa.

L'invention est aussi applicable aux liaisons à bride dites "bi-talon" qui comprennent un talon supplémentaire et de taille réduite agissant à titre complémentaire au niveau de la coopération entre les surfaces 131, 141 (figures 1 et 2) ou les surfaces 131a, 141a (figures 3 et 4), dans une zone éloignée du joint 160 et située de l'autre côté des moyens de serrage par rapport au premier talon principal.

## Revendications

1. Dispositif de liaison étanche précontrainte à brides, comprenant une première bride (230) présentant une première surface de contact (231, 232), une deuxième bride (240) présentant une deuxième surface de contact (241, 242) située en regard de ladite première surface de contact (231, 232), un joint d'étanchéité (260) disposé dans un logement de joint (270) de section rectangulaire ménagé entre lesdites première et deuxième surfaces de contact et des moyens (250) de serrage des première et deuxième brides (230, 240) disposés entre le logement de joint (270) et la périphérie des première et deuxième brides (230, 240) pour venir mettre en contact entre elles au moins une partie des première et deuxième surfaces de contact,
**caractérisé en ce que** les première et deuxième surfaces de contact présentent une zone d'appui localisé (Z11) définissant une surface de contact interbrides étroite, située au voisinage du joint d'étanchéité (260), l'une au moins des première et deuxième surfaces de contact présentant au droit de ladite zone d'appui localisé (Z11) un épaulement formant talon qui constitue une face complète dudit logement de joint (270) de section rectangulaire, **en ce qu'**au moins l'une (292) des première et deuxième surfaces de contact présente dans ladite zone d'appui localisé (Z11) une surface paramétrée essentiellement conique de telle sorte qu'avant serrage des moyens de serrage (250) le contact entre les première et deuxième brides (230, 240) au niveau de la zone d'appui localisé (Z11) soit limité à une fraction de la surface de cette zone d'appui localisé (Z11) tandis qu'après serrage des moyens de serrage (250) le contact est réparti uniformément sur l'ensemble de cette zone d'appui localisé (Z11), et **en ce qu'**il comprend une cale (290) interposée entre les première et deuxième brides (230, 240) au niveau de ladite zone d'appui localisé (Z11), présentant une surface paramétrée (292) qui constitue ladite surface paramétrée définissant le contact entre les première et deuxième brides (230, 240) au niveau de la zone d'appui localisé (Z11).

2. Dispositif selon la revendication 1, **caractérisé en ce que** ladite fraction de la surface de la zone d'appui localisé (Z11) correspond à une valeur inférieure ou égale à 30 % de la surface de la zone d'appui localisé (Z11).

3. Dispositif selon l'une quelconque des revendications 1 et 2, **caractérisé en ce que** ladite zone d'appui localisé (Z11) constitue un talon intérieur par rapport au joint d'étanchéité (260).

4. Dispositif selon l'une quelconque des revendications 1 et 2, **caractérisé en ce que** ladite zone d'appui localisé (Z11) constitue un talon extérieur par rapport au joint d'étanchéité (260).

5. Dispositif selon l'une quelconque des revendications 1 à 4, **caractérisé en ce que** la cale (290) est en acier inoxydable

6. Dispositif selon l'une quelconque des revendications 1 à 5, **caractérisé en ce que** les moyens de serrage (250) comprennent un ensemble d'éléments de fixation disposés perpendiculairement aux première et deuxième brides (230, 240).

7. Dispositif selon l'une quelconque des revendications 1 à 6, **caractérisé en ce qu'**il est appliqué à une tuyauterie ou à une enceinte contenant un fluide sous pression.

## Claims

1. A prestressed flanged leaktight connection device, the device comprising a first flange (230) presenting a first contact surface (231, 232), a second flange (240) presenting a second contact surface (241, 242) situated facing said first contact surface (231, 232), a sealing gasket (260) received in a gasket housing (270) of rectangular section formed between said first and second contact surfaces, and clamping means (250) for clamping together the first and second flanges (230, 240), the clamping means being placed between the gasket housing (270) and the peripheries of the first and second flanges (230, 240) so as to put at least portions of the first and second contact surfaces into mutual contact;
the device being **characterized in that** the first and second contact surfaces present a localized bearing zone (Z11) defining a narrow contact surface between the flanges, situated in the vicinity of the sealing gasket (260), at least one of the first and second contact surfaces constituting directly at said localized bearing zone (Z11) a shoulder forming a dog which constitutes a complete face of said gasket housing (270) having a rectangular section, **in that** at least one (292) of the first and second contact surfaces presents in said localized bearing zone (Z11) a surface of specified shape that is essentially conical, such that before tightening of the tightening means (250), contact between the first and second flanges (230, 240) in the localized bearing zone (Z11) is limited to a fraction of the surface of the localized bearing zone (Z11), whereas after tightening of the tightening means (250) the contact is distributed evenly over all of the localized bearing zone (Z11), and **in that** it includes a spacer (290) that is interposed between the first and second flanges (230, 240) in said localized bearing zone (Z11), that presents a surface (292) of specified shape constituting said surface of specified shape defining the contact between the first and second flanges (230, 240) in the localized bearing zone (Z11).

2. A device according to claim 1, **characterized in that** said fraction of the surface of the localized bearing zone (Z11) corresponds to a value that is less than or equal to 30% of the surface of the localized bearing zone (Z11).

3. A device according to anyone of claims 1 and 2, **characterized in that** said localized bearing zone (Z11) constitutes a dog on the inside relative to the sealing gasket (260).

4. A device according to anyone of claims 1 and 2, **characterized in that** said localized bearing zone (Z11) constitutes a dog on the outside relative to the sealing gasket (260).

5. A device according to any one of claims 1 to 4, **characterized in that** the spacer (290) is made of stainless steel.

6. A device according to any one of claims 1 to 5, **characterized in that** the tightening means (250) comprise a combination of fastener elements disposed perpendicularly to the first and second flanges (230, 240).

7. A device according to any one of claims 1 to 6, **characterized in that** it applies to pipework or an enclosure containing a fluid under pressure.

## Patentansprüche

1. Vorrichtung zur vorgespannten dichten Verbindung mit Flanschen, umfassend einen ersten Flansch (230), der eine erste Kontaktfläche (231, 232) aufweist, einen zweiten Flansch (240), der eine der ersten Kontaktfläche (231, 232) gegenüberliegende zweite Kontaktfläche (241, 242) aufweist, eine Dichtung (260), die in einer Dichtungsaufnahme (270) mit rechteckigem Querschnitt, welche zwischen der ersten und der zweiten Kontaktfläche ausgebildet ist, angeordnet ist, sowie Mittel (250) zum Festziehen des ersten und des zweiten Flansches (230, 240), die zwischen der Dichtungsaufnahme (270) und dem Umfang des ersten und des zweiten Flansches (230, 240) angeordnet sind, um wenigstens einen Teil der ersten und der zweiten Kontaktfläche untereinander in Kontakt zu bringen,
**dadurch gekennzeichnet, dass** die erste und die zweite Kontaktfläche einen örtlich begrenzten, eine schmale Zwischenflanschkontaktfläche definierenden Anlagebereich (Z11) aufweisen, der in der Nähe der Dichtung (260) gelegen ist, wobei wenigstens eine der ersten und zweiten Kontaktflächen direkt an dem örtlich begrenzten Anlagebereich (Z11) eine einen Absatz bildende Schulter aufweist, die eine vollständige Seite der Dichtungsaufnahme (270) mit rechteckigem Querschnitt bildet, dass wenigstens eine (292) der ersten und zweiten Kontaktflächen in dem örtlich begrenzten Anlagebereich (Z11) eine im Wesentlichen konische parametrisierte Fläche aufweist, so dass vor dem Festziehen der Festziehmittel (250) der Kontakt zwischen dem ersten und dem zweiten Flansch (230, 240) im Bereich des örtlich begrenzten Anlagebereichs (Z11) auf einen Bruchteil der Fläche dieses örtlich begrenzten Anlagebereichs (Z11) begrenzt ist, während nach dem Festziehen der Festziehmittel (250) der Kontakt gleichmäßig über diesen gesamten örtlich begrenzten Anlagebereich (Z11) verteilt ist, und dass sie einen zwischen dem ersten und dem zweiten Flansch (230, 240) im Bereich des örtlich begrenzten Anlagebereichs (Z11) eingefügten Keil (290) umfasst, der eine parametrisierte Fläche (292) aufweist, welche die parametrisierte Fläche bildet, die den Kontakt zwischen dem ersten und dem zweiten Flansch (230, 240) im Bereich des örtlich begrenzten Anlagebereichs (Z11) definiert.

2. Vorrichtung nach Anspruch 1, **dadurch gekennzeichnet, dass** der Bruchteil der Fläche des örtlich begrenzten Anlagebereichs (Z11) einem Wert von weniger als oder gleich 30 % der Fläche des örtlich begrenzten Anlagebereichs (Z11) entspricht.

3. Vorrichtung nach einem der Ansprüche 1 und 2, **dadurch gekennzeichnet, dass** der örtlich begrenzte Anlagebereich (Z11) einen in Bezug auf die Dichtung (260) inneren Absatz bildet.

4. Vorrichtung nach einem der Ansprüche 1 und 2, **dadurch gekennzeichnet, dass** der örtlich begrenzte Anlagebereich (Z11) einen in Bezug auf die Dichtung (260) äußeren Absatz bildet

5. Vorrichtung nach einem der Ansprüche 1 bis 4, **dadurch gekennzeichnet, dass** der Keil (290) aus rostfreiem Stahl besteht.

6. Vorrichtung nach einem der Ansprüche 1 bis 5, **dadurch gekennzeichnet, dass** die Festziehmittel (250) eine Menge von Befestigungselementen, die senkrecht zu dem ersten und dem zweiten Flansch (230, 240) angeordnet sind, umfassen.

7. Vorrichtung nach einem der Ansprüche 1 bis 6, **dadurch gekennzeichnet, dass** sie bei einer Rohrleitung oder bei einem ein Druckfluid enthaltenden Behälter eingesetzt wird.
